(19) Europäisches Patentamt
European Patent Office
Office européen des brevets

(11) Veröffentlichungsnummer: **0 418 556 A1**

# (12) EUROPÄISCHE PATENTANMELDUNG

(21) Anmeldenummer: **90115744.6**

(22) Anmeldetag: **17.08.90**

(51) Int. Cl.5: **C08C 19/00**, C08F 8/00

(30) Priorität: **30.08.89 DE 3928660**
**11.01.90 DE 4000625**

(43) Veröffentlichungstag der Anmeldung:
**27.03.91 Patentblatt 91/13**

(84) Benannte Vertragsstaaten:
**BE DE ES FR GB IT NL**

(71) Anmelder: **BAYER AG**

**W-5090 Leverkusen 1 Bayerwerk(DE)**

(72) Erfinder: **Weider, Richard, Dr.**
**Quettingerstrasse 78**
**W-5090 Leverkusen 3(DE)**
Erfinder: **Dujardin, Ralf, Dr.**
**Bodelschwinghstrasse 18**
**W-4150 Krefeld(DE)**
Erfinder: **Engels, Hans-Wilhelm, Dr.**
**Dickeicherfeld 12**
**W-5014 Kerpen 3(DE)**

## (54) Verfahren zur Herstellung von Kautschuken.

(57) Gegenstand der vorliegenden Erfindung ist ein Verfahren zur Herstellung von Kautschuken mit phenolischen OH-Gruppen, sowie die nach dem erfindungsgemäßen Verfahren erhältlichen Kautschuke.

EP 0 418 556 A1

Xerox Copy Centre

## VERFAHREN ZUR HERSTELLUNG VON KAUTSCHUKEN

Gegenstand der vorliegenden Erfindung ist ein Verfahren zur Herstellung eines Kautschuks mit 5 bis 60, vorzugsweise mit 5 bis 40, phenolischen OH-Gruppen, das dadurch gekennzeichnet ist, daß man Kautschuke mit einem Doppelbindungsgehalt zwischen 3 und 250 pro 1.000 C-Atomen im Kautschuk, vorzugsweise zwischen 3 und 10 pro 1.000 C-Atomen im Kautschuk, mit Phenolen, gegebenenfalls in Gegenwart eines Katalysators, in Substanz bei Temperaturen zwischen 50 °C und 150 °C, vorzugsweise von 70 °C bis 130 °C und Reaktionszeiten zwischen 1 Minute und 30 Minuten umsetzt Das Reaktionsprodukt wird in üblicher Weise abgekühlt und granuliert.

Gegenstand der vorliegenden Erfindung sind auch die nach dem erfindungsgemäßen Verfahren erhältlichen Kautschuke.

Stand der Technik

Aus JA 63/268 703 sind Kohlenwasserstoffpolymere wie hydriertes Polybutadien bekannt, die endständig oder als aufgefropfte Seitenketten Kohlenwasserstoffketten mit Hydroxyphenylendgruppen tragen. Diese werden beispielsweise aus hydriertem Polybutadien mit alkoholischen OH-Gruppen und Methylsalicylat in Gegenwart von p-Toluolsulfonsäure hergestellt. Die Hydroxyphenylendgruppen können aber auch bei der Synthese der Kohlenwasserstoffketten via anionische Polymerisation von Dienen unter Einbeziehung von Parahydroxystyrol dessen Hydroxygruppe vorübergehend maskiert ist, eingeführt werden.

Aus JA 52/009 098 (nur als Auszug vorliegend) sind Reaktionsprodukte von Kautschuken mit Phenolen in Gegenwart von Friedel-Crafts-Katalysatoren bekannt, welche zu Polyphenylenoxiden durch oxidative Kupplung umgesetzt werden.

Aus der DE-OS 3 509 093 bzw. aus der EP-A 0 195 199 sind Kohlenwasserstoffharz-Polyphenylen ether-Kammpolymere bekannt.

Diese Kammpolymeren werden hergestellt, indem man Kohlenwaserstoffharze, also Kautschuke, mit Phenolen in Gegenwart einer Säure umsetzt (siehe Seite 8 der DE-OS 3 509 093).

Aus Beispiel 1 der DE-OS 3 509 093 ist ersichtlich, das die Reaktion in Lösung erfolgt.

Derartige, säurekatalysierte Reaktionen in Lösung haben jedoch den Nachteil, daß die Phenole im Kern mehrfach durch die ungesättigten Gruppen der Kohlenwasserstoffharze alkyliert werden.

Um dies zu vermeiden, werden gemäß DE-OS 3 509 093 bzw. EP-A 0 195 199 nur spezielle Phenole eingesetzt, die aufgrund ihrer vorgegebenen Substitution nur einmal alkylierbar sind (siehe die Phenole (IV) auf Seite 8 und im Anspruch 1 der DE-OS 3 509 093).

Aus der EP-A 0 236 554 sind entsprechende Umsetzungsprodukte von Kohlenwaserstoffharzen mit Phenolen bekannt. Auch hier wird die Umsetzung nur in Lösung beschrieben. Hierbei zeigt sich wiederum (siehe die auf Seite 3 der EP-A-0 236 554 zitierte "Makromol Chem. 24, 205 ff (1972), insbesondere Seite 212), daß Mehrfachalkylierung stattfindet, die zur Vernetzung der Produkte führt. Es wurde nun überraschend gefunden, daß auch mehrfach alkylierbare, d.h. in mindestens zwei ortho- und/oder para-Positionen unsubstituierte Phenole sich ohne Vernetzung an Kautschuke anbinden lassen.

Geeignete Phenole für das erfindungsgemäße Verfahren sind vorzugsweise solche der Formel (I)

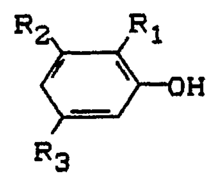

worin

$R_1$, $R_2$ und $R_3$ unabhängig voneinander, gleich oder verschieden sein können und H, $C_1$-$C_{12}$-Alkyl, Cyclohexyl, Phenyl, $C_1$-$C_{12}$-Alkoxy, $C_1$-$C_6$-Alkylphenyl, Phen-$C_1$-$C_6$-Alkyl, Fluor oder Chlor sind. $R_1$ und $R_2$ können außerdem einen cycloaliphatischen oder aromatischen, annellierten 6-Ring bilden.

Geeignete Phenole für das erfindungsgemäße Verfahren sind vorzugsweise auch die der Formel (II)

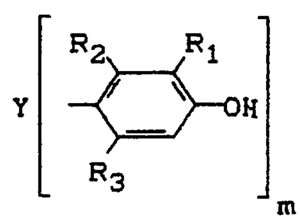

(II)

worin $R_1$ bis $R_3$ die für Formel (1) genannte Bedeutung haben, m 1 oder 2 ist und Y ein radikalisch reaktiver Rest ist.

Als radikalisch reaktiver Y-Rest soll im vorliegenden Zusammenhang vorzugsweise ein Alkenylrest, ein HS-Rest, ein Alkylmercaptanrest oder eine Polysulfidbrücke mit insbesondere 2 bis 8 S-Atomen sein.

Geeignete Phenole der Formel (I) sind beispielsweise Phenol; Chlorphenole wie 2-Chlorphenol, 3-Chlorphenol, 4-Chlorphenol, 2,5-Dichlorphenol; Alkylphenole wie technisches Kresol, 2-Methylphenol, 3-Methylphenol, 4- Methylphenol, 2,3-Dimethylphenol, 3,4-Dimethylphenol, 3,5-Dimethylphenol, 2,5-Dimethylphenol, 2,3,5-Trimethylphenol, 2-Ethylphenol, 2-Isopropylphenol, 3-Ethyl-5-methylphenol, 2-sec.-Butylphenol, 2-tert.-Butylphenol, 4-tert.-Butylphenol, 2-Isopropyl-5-methylphenol, 3-Isopropyl-5-methylphenol, 4-tert.-Pentylphenol, 4-(1,1,3,3-Tetramethylbutyl)-phenol, Nonylphenol, Dodecylphenol; 4-Cyclohexylphenol, 2-Cyclohexylphenol; 2-Phenylphenol, 4-Phenylphenol, 3-Phenylphenol; 5,6,7,8-Tetrahydro-1-naphthol, 1,1,3,3-Tetramethyl-5-indanol, 1-Naphthol, 1-Anthrol; Benzylphenol; 3-Methoxyphenol, 2-Methoxyphenol, 2-Ethoxyphenol, 2-Isopropoxyphenol und 4-Methoxyphenol.

Geeignete Phenole der Formel (II) sind beispielsweise 4-Mercaptophenol, 4-Methylmercaptophenol; Bis-4-hydroxyphenyl)-disulfid, Bis-(4-hydroxyphenyl)-trisulfid, Bis(4-hydroxy-3-methylphenyl)-disulfid, 4-Vinylphenol, 2-Methyl-4-vinylphenol, 3-Methyl-4-vinylphenol, 4-Isopropenylphenol, 2-Methyl-4-isopropenylphenol und 4-(1-Buten-2-yl)-phenol.

Bevorzugte Phenole der Formeln (I) und (II) sind Phenol, 2-Methylphenol, 3-Methylphenol, 4-Methylphenol, Naphthol, 4-Isopropenylphenol und Bis-4-hydroxyphenyl)disulfid.

Besonders bevorzugt ist Phenol.

Für die Umsetzung mit den Phenolen der Formel (I) geeignete Katalysatoren sind Protonensäuren wie beispiels weise Schwefelsäure, Phosphorsäure, phosphorige Säure, Halogenwasserstoffe, Perchlorsäure oder starke organische Säuren wie Alkyl- oder Arylsulfonsäure wie Methansulfonsäure, 2-Chlorethansulfonsäure, Trifluormethansulfonsäure, Perfluorbutan-1-sulfonsäure, Benzolsulfonsäure, Toluolsulfonsäure, Naphthalinsulfonsäure, 1,3-Benzoldisulfonsäure und Benzylsulfonsäure; Ameisensäure, Essigsäure, Trichloressigsäure oder Lewissäuren wie beispielsweise Bortrifluorid, Aluminiumchlorid, Zinkchlorid, Eisen(III)chlorid, Zinntetrachlorid, Titan(IV)chlorid oder Mischungen der genannten Katalysatoren.

Für die Umsetzung mit den Phenolen der Formel (II) geeignete Katalysatoren sind Azoverbindungen wie beispielsweise Azobis-isobutyronitril, 2,2′-Azobis(2,4-dimethyl-valeronitril), (1-Phenylethyl)-azodiphenylmethan, Dimethyl-2,2′-azobis-isobutyrat, 1,1′-Azobis-(1-cyclohexancarbonitril), 2,2′-azobis(2,4,4-trimethylpentan), 2,2′-Azobis(2-methylpropan) oder organische Peroxide wie beispielsweise Diacylperoxide wie Dilauroylperoxid, Diacetylperoxid, Dibenzoylperoxid; Peroxydicarbonate wie Dicetyl-peroxydicarbonat; Alkyl-perester wie tert.-Butyl-per-2-ethylhexanoat, tert.-Butyl-perisononanoat, tert.-Butyl-perbenzoat; Dialkylperoxide wie Dicumylperoxid, Di-tert.-butylperoxid, Di-(tert.-butylperoxiisopropyl)benzol; Alkylhydroperoxide wie Cumolhydroperoxid, tert.-Butylhydroperoxid oder Perketale und Keton-peroxide wie 2,2-Bis(tert.-butylperoxy)-butan und Methylethylketonperoxid.

Bevorzugte Katalysatoren für Phenole der Formel (I) sind Alkyl- und Arylsulfonsäuren, besonders bevorzugt ist Methansulfonsäure.

Die Menge des Katalysators richtet sich nach der Art und der Menge des Phenols, der Reaktivität des verwendeten Kautschuks und dem gewünschten Phenolgehalt im Endprodukt und beträgt 0 bis 0,2, bevorzugt 0,05 bis 0,1 Mol pro Mol Phenol. Auf den Katalysator kann verzichtet werden, wenn das verwendete Phenol eine ausreichende Säurestärke besitzt. Die Reaktion mit den Reaktivphenolen erfolgt in der Regel ohne den Zusatz von Katalysatoren durch thermische Aktivierung der reaktiven Substituenten.

Nach dem beschriebenen Verfahren lassen sich eine große Zahl von Kautschuken mit Hydroxyphenylgruppen versehen.

Für das erfindungsgemäße Verfahren können Natur- oder Synthesekautschuke oder Mischungen daraus, die ein $\overline{M}$ n von größer als 40.000 vorzugsweise von 40 000 bis 200 000 besitzen, verwendet werden. Es können Homopolymere eines Diens, Copolymere von mindestens zwei konjugierten Dienen, Copolymere von mindestens einem konjugierten Dien und mindestens einem anderen olefinischen Monomer, durch ringöffnende Polymerisation eines Cycloolefins erhaltene Polymere, Copolymere aus einem cyclischen, nichtkonjugierten Dien und mindestens einem anderen olefinischen Monomer, durch partielle Hydrierung der genannten Polymere erhaltene Polymere oder Mi schungen hieraus eingesetzt werden. Im einzelnen seien genannt: Naturkautschuk, Synthesekautschuke wie Polybutadien, Styrol-Butadien-Kautschuke, Acrylnitril-Butadien-Katuschuke, teilhydrierte Acrylnitril-Butadienkautschuke, Polychloropren, Isopren-Isobutylen-Kautschuke halogenierte Copolymere aus Isopren und Isobutylen, Ethylen-Propylen-Dien-Kautschuke, Propylenoxid-Allylglycidether-Copolymere, Polyoctenylen und Polynorbornen.

Bevorzugt werden solche Polymere eingesetzt, die ein Terpolymer aus 20 bis 60 Gew.-% Propen, 40 bis 80 Gew.-% Ethen und 1,5 bis 13 Gew.-%. eines Diens mit 4 bis 25 Kohlenstoffatomen, bevorzugt einem 5-Alkyliden-2-norbornen, in dem die Alkylidengruppe 2 bis 5 Kohlenstoffatome enthält darstellen und ein $\overline{M}$ n van größer als 40.000 besitzen.

Ebenfalls bevorzugt werden außerdem Copolymere aus 55 bis 85 Gew.-% Butdadien und 15 bis 45 Gew.-% Acrylnitril, bei denen 90 bis 99 % der

vorhandenen Doppelbindungen durch Hydrierung abgesättigt wurden. Aus dieser Gruppe sind besonders bevorzugt Copolymere aus 55 bis 70 Gew.-% Butadien und 30 bis 45 Gew.-% Acrylnitril, bei denen 93 bis 97 % der vorhandenen Doppelbindungen durch Hydrierung abgesättigt wurden.

Erfindungsgemäß geeignete Kautschuke sind insbesondere solche, die Mooney Viskositäten von mindestens 30, vorzugsweise von 30 bis 150 (gemessen nach DIN 53 523 (Teil 1-3); ASTM-D 1646-74 bei 100° C) haben, die sie außer den geforderten $\overline{M}$ n von mindestens 40.000, vorzugsweise von 40 000 bis 200 000 erfüllen sollen.

Für das erfindungsgemäße Verfahren ist das Verhältnis von Phenolen zu Kautschuken so zu bemessen, daß pro phenolische OH-Gruppe im Reaktionsprodukt 1 bis 5 Mol phenolisches OH in dem Reaktionsgemisch einzusetzen sind.

Die Durchführung des erfindungsgemäßen Verfahrens erfolgt in Abwesenheit eines Lösungsmittels durch intensives Vermischen der Komponenten. Das Mischen erfolgt dabei in einem für Kautschuk- oder Kunststoffverarbeitung üblichen Mischaggregat, z.B. einer Reaktionsschnecke, Extruder oder Kneter. Die Reaktionszeit beträgt dabei zwischen 1 und 30 Minuten. Gegebenenfalls kann überschüssiges Phenol nach der Reaktion in einer Vakuumstufe, durch Austreiben mit Wasserdampf oder durch Extraktion mit einem Lösungsmittel entfernt werden.

Die Mischtemperatur beträgt zwischen 50° C und 150° C, vorzugsweise 70° C bis 130° C. Das Reaktionsprodukt wird abgekühlt und kann dann in bekannter Weiss granuliert oder kompaktiert werden.

Als zusätzliche Additive sind während oder nach der erfindungsgemäßen Umsetzung folgende an sich bekannte Substanzen einsetzbar:

Stabilisatoren wie Alterungs-, Ermüdungs- und Ozonschutzmittel, Weichmacher, Füllstoffe, Pigmente, Faktisse, Trennmittel oder Puderungsmittel sowie die in der Kautschukindustrie üblichen Vulkanisationshilfsmittel.

Die nach dem erfindungsgemäßen Verfahren erhältlichen Kautschuke sind zu beliebigen Formkörpern vulkanisierbar, was in üblicher Weise mit den bekannten Methoden der Vulkanisation möglich ist.

Derartige Formkörper, beispielsweise Dichtungen sind wie übliche Kautschukartikel technisch einsetzbar.

Die erfindungsgemäß erhältlichen Kautschuke sind aber auch, ohne vorherige Vulkanisation, als Mischungspartner in anderen Kautschuken einsetzbar, um beispielsweise deren Klebrigkeit zu verbessern.

## Beispiele

### Beispiel 1

Ein EPDM-Harz (Copolymer bestehend aus 50 Gew.-% Ethylen, 41 Gew.-% Propylen und 9 Gew.-% 5-Ethyliden-bicyclo-(2.2.1)-hept-2-en, Mooney Viskosität ML (1+4) bei 100° C = 90, $\overline{M}_n$ ca. 95.000) wird in einer Zweiwellenschnecke, die in der Endzone mit einer Vakuumausdampfeinrichtung zur Entfernung des überschüssigen Phenols versehen ist, bei einer Zylindertemperatur von 90° C mit 9 Gew.-% eines Gemisches aus Phenol und Methansulfonsäure (99 : 1) vermischt. Die Austrittstemperatur beträgt dabei ca. 120° C, die mittlere Verweilzeit bis zur Vakuumstufe ca. 12 Minuten. Der austretende Strang wird durch ein Wasserbad gezogen, luftgetrocknet und anschließend unter Zusatz von 1 Gew.-% Talkum granuliert. Der Gehalt an gebundenem Phenol beträgt nach IR-Messungen 2,8 - 3,2 Gew.-%. Das rieselfähige Granulat ist gelfrei löslich und zu einem Walzfell verarbeitbar.

### Beispiel 2

Ein EPDM-Harz (Copolymer, bestehend aus 68 Gew.-% Ethylen, 27 Gew.-% Propylen und 5 Gew.-% 5-Ethyliden-bicyclo-(2.2.1)-hept-2-en, Mooney Viskosität (1+4) bei 100° C = 85, $\overline{M}_n$ ca. 50.000) wird wie in Beispiel 1 behandelt. Statt mit Talkum wird mit Bisphenol A-Polycarbonatpulver gepudert. Der Gehalt an gebundenem Phenol beträgt nach IR-Messungen 1,9 - 2,5 Gew.-%. Das Produkt ist gelfrei löslich und zu einem Walzfell verarbeitbar.

### Beispiel 3

Beispiel 2 wird ohne Zugabe von Puderungsmitteln wiederholt. Durch schnelle Abkühlung auf ca. 20° C bleibt das Granulat rieselfähig.

### Beispiel 4

Dem EPDM-Harz aus Beispiel 1 wird bei Zugabe in die Schnecke 10 Gew.-% Bisphenol A-Polycarbonatpulver zugesetzt. Das so erhaltene Granulat bleibt ohne Puderung rieselfähig.

### Beispiel 5

800 g des EPDM-Harzes aus Beispiel 1 werden in einem 1,3 l - Pomini-Kneter bei einer Manteltemperatur von 60° C und einer Drehzahl von 40

l/min mastiziert. Nach 1 Minute werden 72 g Phenol, 7,2 g Methansulfonsäure und weitere 100 g EPDM-Harz zugegeben und weitere 8 min gemischt. Die Massetemperatur steigt dabei auf 90 - 100 ° C. Der Auswurf erfolgt in ein Wasserbad. Nach Entfernen des überschüssigen Phenols durch Extraktion mit Toluol/Methanol wird der Gehalt an gebundenem Phenol IR-spektroskopisch zu 3,2 Gew.-% bestimmt. Das Produkt ist gelfrei löslich und zu einem Walzfell verarbeitbar.

Beispiel 6

Insgesamt 900 g eines HNBR-Harzes (Copolymer aus 43 Gew.-% Acrylnitril und 57 Gew.-% Butadien, Mooney- Viskosität ML (1+4) bei 100 ° C = 75, $\overline{M}_n$ ca. 70.000, durch Hydrierung auf 4 % des ursprünglichen Doppelbindungsgehaltes reduziert) werden wie in Beispiel 4 behandelt. Der Gehalt an gebundenem Phenol wird IR-spektroskopisch zu 3,8 Gew.-% bestimmt. Das Produkt ist gelfrei löslich und zu einem Walzfell verarbeitbar.

Beispiel 7

45 g des EPDM-Harzes aus Beispiel 1 werden in einem 70 ml Kneter bei einer Manteltemperatur von 120 ° C und einer Drehzahl von 50 l/min mit 2,12 g Bis-(4-hydroxyphenyl)-disulfid versetzt und 10 Minuten gemischt. Das Rohprodukt wird mit Toluol/Ethanol extrahiert und der Gehalt an phenolischen Gruppen IR-spektroskopisch zu 2,8 Gew.-% bestimmt.

Beispiel 8

## Ansprüche

1. Verfahren zur Herstellung eines Kautschuks mit 5 bis 60 phenolischen OH-Gruppen, dadurch gekennzeichnet, daß man Kautschuke mit einem Doppelbindungsgehalt zwischen 3 und 250 pro 1.000 C-Atomen im Kautschuk, mit Phenolen, gegebenenfalls in Gegenwart eines Katalysators, in Substanz bei Temperaturen zwischen 50 ° C und 150 ° C zwischen 1 Minute und 30 Minuten umsetzt.
2. Kautschuke, erhältlich nach dem Verfahren des Anspruchs 1.

Europäisches Patentamt

# EUROPÄISCHER RECHERCHENBERICHT

Nummer der Anmeldung

**EP 90 11 5744**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 210 058 (REICHHOLD-ALBERT-CHEMIE)<br>* Ansprüche 1-2; Seite 4, Zeilen 24-28 * | 1-2 | C 08 C 19/00<br>C 08 F 8/00 |
| X | US-A-4 070 402 (R.E. KARLL et al.)<br>* Anspruch 1 * | 1-2 | |
| X | DE-B-1 595 385 (CHEMISCHE WERKE ALBERT)<br>* Anspruch 1 * | 1-2 | |
| | | | **RECHERCHIERTE SACHGEBIETE (Int. Cl.5)** |
| | | | C 08 C<br>C 08 F 8 |

Der vorliegende Recherchenbericht wurde für alle Patentansprüche erstellt

| Recherchenort | Abschlußdatum der Recherche | Prüfer |
|---|---|---|
| Den Haag | 11 Dezember 90 | VAN HUMBEECK F.W.C. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument